# EUROPEAN PATENT APPLICATION

(11) **EP 4 216 562 A1**
(43) Date of publication of application: **26.07.2023**
(21) Application number: 22208324.8
(22) Date of filing: 18.11.2022
(51) Int. Cl.: H04N 23/45, H04N 23/56, H04N 23/951, H04N 23/10

(54) **IMAGE-CAPTURING DEVICE, IMAGE CAPTURING METHOD, CARRIER MEDIUM, AND IMAGE-CAPTURING SYSTEM**

(30) Priority: 21.01.2022 JP 2022007837
(71) Applicant: Ricoh Company, Ltd., Tokyo 143-8555 (JP)
(72) Inventor: Takasu, Shusaku, Tokyo, 143-8555 (JP)
(74) Representative: Marks & Clerk LLP

(57) **Abstract**

An image-capturing device (100) includes: a light emitter (110) configured to emit light within an irradiation range (L1) to an object; a monochrome camera (120) configured to capture a monochrome image of the object, the monochrome camera (120) having an image-capturing range (P1) within the irradiation range (L1); a color camera (130) configured to capture a color image of the object, the color camera (130) having an image-capturing range (P2) within the irradiation range (L1); and an irradiation controller (141) configured to cause the light emitter to emit the light having an amount to capture the monochrome image by the monochrome camera (120).

## Description

### BACKGROUND

### Technical Field

Embodiments of the present disclosure relate to an image-capturing device, an image capturing method, a carrier medium, and an image-capturing system.

### Related Art

Japanese Patent No. 6341396 discloses a technique for obtaining a high-definition color image using a monochrome camera and a color camera. In that technique, the monochrome camera captures a monochrome image of a monitored area with infrared light, and the color camera captures a color image of the monitored area with environmental light. The monochrome image is colored with color information obtained from the color image so as to provide a high-definition color image.

However, such technique disclosed in Japanese Patent No. 6341396 uses different types of dedicated lights for the monochrome camera and the color camera, respectively, and faces a challenge to achieve a simple configuration of an image-capturing device with a monochrome camera and a color camera.

### SUMMARY

It is an object of the present invention to achieve a simple configuration of an image-capturing device with a monochrome camera and a color camera.

An embodiment provides an image-capturing device including: a light emitter configured to emit light within an irradiation range to an object; a monochrome camera configured to capture a monochrome image of the object, the monochrome camera having an image-capturing range within the irradiation range; a color camera configured to capture a color image of the object, the color camera having an image-capturing range within the irradiation range; and an irradiation controller configured to cause the light emitter to emit the light having an amount to capture the monochrome image by the monochrome camera.

Another embodiment provides an image-capturing method including: causing a light emitter to emit a light within an irradiation range to an object, the light having an amount enough to capture a monochrome image by a monochrome camera; capturing the monochrome image of the object by the monochrome camera having an image-capturing range within the irradiation range; and capturing a color image of the object by a color camera having an image-capturing range within the irradiation range.

Still another embodiment provides a carrier medium carrying computer readable code for controlling a processor to carry out the above-described method.

Even another embodiment provides an image-capturing system including: the image-capturing device described above; and a high-resolution image generator configured to: acquire color information from the color image received from the image-capturing device; and superimpose the color information on the monochrome image received from the image-capturing device to generate a high-resolution color image.

One embodiment of the present disclosure achieves a simple configuration of an image-capturing device with a monochrome camera and a color camera.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is an external perspective view of an image-capturing device according to an embodiment of the present disclosure;
FIG. 2 is an illustration of an irradiation range and image-capturing ranges of an image-capturing device according to an embodiment of the present disclosure;
FIG. 3 is another illustration of an irradiation range and image-capturing ranges of an image-capturing device according to an embodiment of the present disclosure;
FIG. 4 is a front view of an image-capturing device in FIG. 1;
FIG. 5 is an illustration of arrangement of the optical axes of the image-capturing device according to an embodiment;
FIG. 6 is a block diagram of a functional configuration of a control device included in the image-capturing device according to an embodiment of the present disclosure;
FIG. 7 is a flowchart of a process performed by the control device included in the image-capturing device according to an embodiment of the present disclosure;
FIGS. 8A and 8B are illustrations of an image-capturing device according to an embodiment of the present disclosure; and
FIG. 9 is an illustration of irradiation ranges and image-capturing ranges of an image-capturing device according to a modification of an embodiment of the present disclosure.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Hereinafter, an embodiment of the present disclosure will be described with reference to the drawings.

### Configuration of Image-Capturing Device

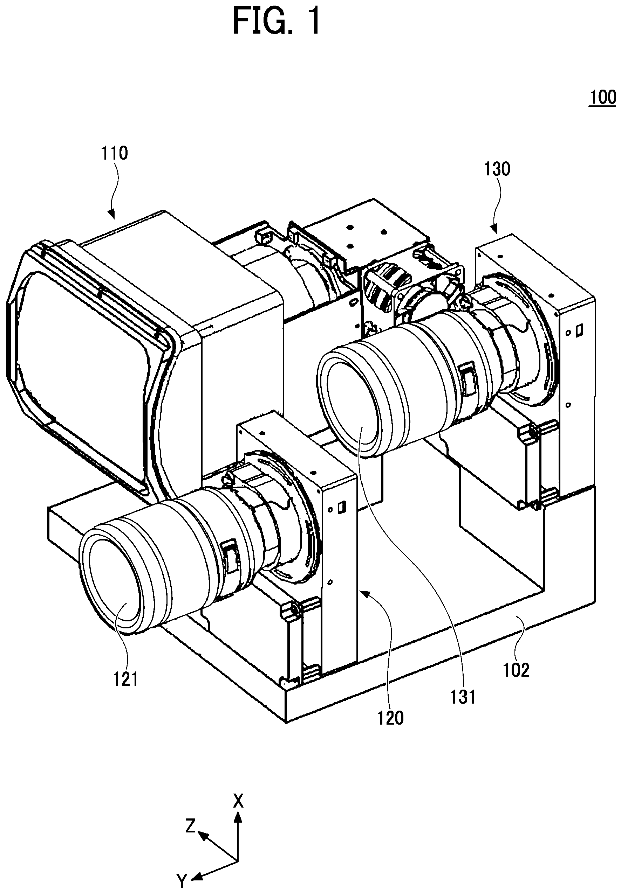

FIG. 1 is an external perspective view of an image-capturing device 100 according to an embodiment of the present disclosure. The image-capturing device 100 in FIG. 1 includes a board 102, a lighting device 110, a monochrome camera 120, and a color camera 130.

The board 102 is a plate-shaped member that supports the lighting device 110, the monochrome camera 120, and the color camera 130.

The lighting device 110 serves as a light emitter. The lighting device 110 emits light toward an object in front (i.e., in the +Y-direction, or along the Y-axis). The +Y-direction is a direction in which light emitted from the lighting device 110 proceeds (i.e., an irradiation light).

The lighting device 110 includes a light source (e.g., a light emitting diode (LED)).

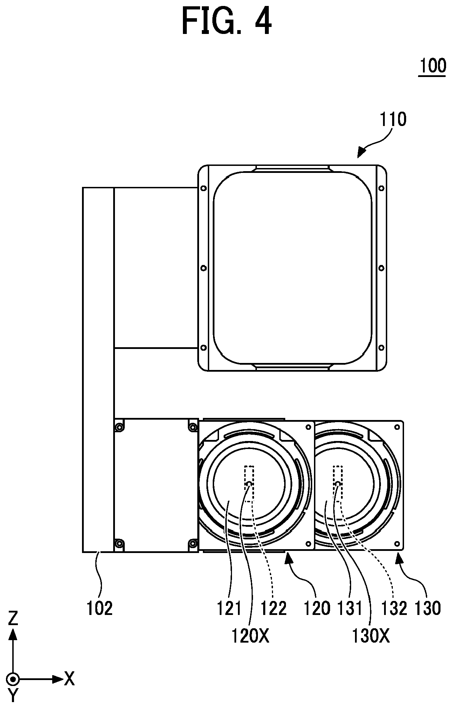

The monochrome camera 120 captures a monochrome image of an object present in front (i.e., the +Y-direction, or along the Y-axis). The +Y-direction is a shooting direction (or an image-capturing direction) of the monochrome camera 120 (i.e., the direction in which the monochrome camera 120 is panned). The monochrome camera 120 includes a lens 121, and a line sensor 122 (see FIG. 4). In another example, the monochrome camera 120 includes an ultraviolet (UV) cut filter and a low pass filter intended for removing moire.

The color camera 130 captures a color image of an object present in front (i.e., the +Y-direction, or along the Y-axis). The +Y-direction is a shooting direction (or an image-capturing direction) of the color camera 130 (i.e., the direction in which the color camera 130 is panned). The color camera 130 includes a lens 131, a filter such as a color filter, and a line sensor 132 as a second line sensor (see FIG. 4). In another example, the color camera 130 includes a UV cut filter and a low pass filter intended for removing moire.

The line sensor 122 of the monochrome camera 120 and the line sensor 132 of the color camera 130 each include multiple pixels, which are lined up or aligned along the Z-axis (i.e., the up-to-down direction). Examples of the line sensor 122 and the line sensor 132 include an image sensor such as a charge coupled device (CCD) and a complementary metal oxide semiconductor (CMOS). In other words, the line sensor 122 and the line sensor 132 extends in a line direction, or the up-to-down direction (i.e., along the Z-axis. The monochrome camera 120 includes the first line sensor 122 extending in the line direction (i.e., along the Z-axis), and the color camera 130 includes the second line sensor 132 extending in the line direction. The light emitter 110 is offset from each of the monochrome camera 120 and the color camera 130 in the line direction. The first line sensor 120 and the second line sensor 132 are at the identical position in the line direction.

In the present embodiment, the monochrome camera 120 captures a high-resolution monochrome image (a monochrome image having a first resolution), and the color camera 130 captures a low-resolution color image (a color image having a second resolution). In the present embodiment, the higher resolution of the monochrome camera 120 and the low resolution of the color camera 130, which are relative expressions, means that the color camera 130 has a resolution about ¼ to ½ of the resolution of the monochrome camera 120. For example, when the monochrome camera 120 has a resolution of 8K, color camera 130 has a resolution ranging from 2K to 4K.

### Irradiation Range and Image Capturing Range

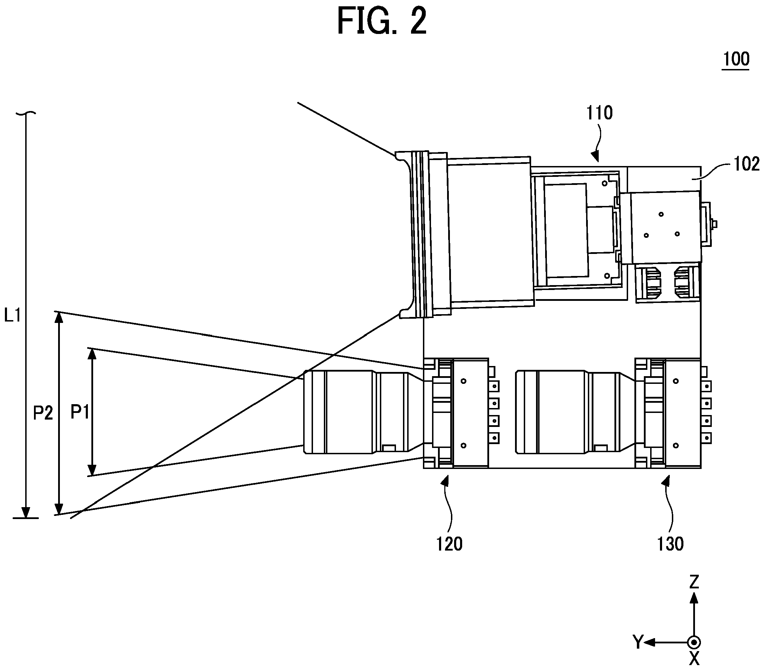

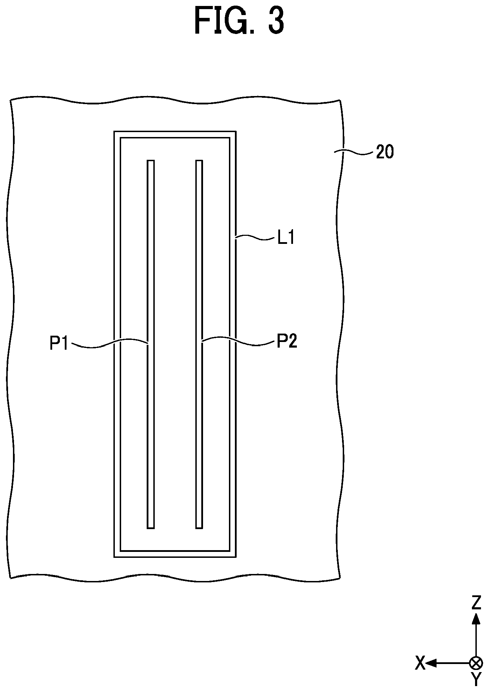

FIGS. 2 and 3 are illustrations of an irradiation range L1 and an image-capturing range P1 of the image-capturing device 100 according to an embodiment.

As illustrated in FIGS. 2 and 3, the lighting device 110 emits light in the irradiation direction to an object 20 (see FIG. 3). The light emitted from the lighting device 110 has an irradiation range L1 of a rectangular shape with a longer-side direction up-to-down direction (i.e., the Z-axis).

As illustrated in FIGS. 2 and 3, the monochrome camera 120 has a linear image-capturing range P1 with a longer-side direction in the up-to-down direction (i.e., along the Z-axis) within the irradiation range L1 of the light emitted from the lighting device 110. This image-capturing range P1 allows the monochrome camera 120 to capture a high-resolution monochrome image of the object 20 with the light emitted from the lighting device 110. The image-capturing range P1 extends in the Z-direction (i.e., along the X-axis, or referred to also as a line direction) in which multiple pixels of the line sensor 122 included in the monochrome camera 120 are arranged.

As illustrated in FIGS. 2 and 3, the color camera 130 has a linear image-capturing range P2 with a longer-side direction in the up-to-down direction (i.e., along the Z-axis) within the irradiation range L1 of the light emitted from the lighting device 110. This image-capturing range P2 allows the color camera 130 to capture a low-resolution color image of the object 20 with the light emitted from the lighting device 110. The image-capturing range P2 extends in the Z-direction (i.e., along the X-axis, or the line direction) in which multiple pixels of the line sensor 132 included in the color camera 130 are arranged.

As described above, the image-capturing device 100 according to one embodiment captures both a monochrome image and a color image of the object 20 at the same time, with light emitted from one lighting device 110. The image-capturing device 100 according to an embodiment with this configuration eliminates the use of a light dedicated to each of the monochrome camera 120 and the color camera 130. Such a image-capturing device 100 according to an embodiment achieves a simple-configuration image-capturing device 100 provided with the monochrome camera 120 and the color camera 130.

Further, the image-capturing directions of the monochrome camera 120 and the color camera 130 are coincide with each other. This allows the image-capturing device 100 according to an embodiment to capture a monochrome image and a color image each having the same angle. The image-capturing device 100 according to an embodiment allows a higher accuracy and efficiency of processing involved in generation of a high-precision color image using the monochrome image and the color image.

### Arrangement Configuration of Image-Capturing Device

FIG. 4 is a front view of an image-capturing device 100 according to an embodiment of the present disclosure. The image-capturing device 100 in FIG. 4 includes the lighting device 110 in its upper portion (i.e., in the positive-side portion) of the image-capturing device 100 along the Z-axis and the monochrome camera 120 and the color camera 130 in the lower portion (i.e., in the negative-side portion) of the image-capturing device 100 along the Z-axis. The lighting device 110 is offset from each of the monochrome camera 120 and the color camera 130 in the line direction in which the line sensors 122 and 132 extend.

The monochrome camera 120 is in the middle of the image-capturing device 100 in the up-to-down direction (i.e., along the X-axis). The color camera 130 is on the left (i.e., at the positive side of the monochrome camera 120 along the X-axis. Further, the color camera 130 is disposed behind the monochrome camera 120 in the Y-direction (i.e., at the negative side of the monochrome camera 120 along the Y-axis).

As illustrated in FIG. 4, the right portion of the lens 131 (i.e., the negative-side portion of the lens 131 along the X-axis) in the color camera 130 partly overlaps with the monochrome camera 120. However, the overlap between the color camera 130 and the monochrome camera 120 has no adverse effect on the image-capturing range of the color camera 130.

The image-capturing device 100 according to an embodiment includes the color camera 130 provided with the lens 131 partly overlapping the monochrome camera 120 without having an adverse effect on the image-capturing range of the color camera 130. This configuration allows the optical axis 120X of the monochrome camera 120 and the optical axis 130X of the color camera 130 to be close to each other. This further allows a reduction in effects on the image-capturing device 100 according to an embodiment due to the positional difference in the axis between the monochrome camera 120 and the color camera 130.

### Arrangement of Optical Axes

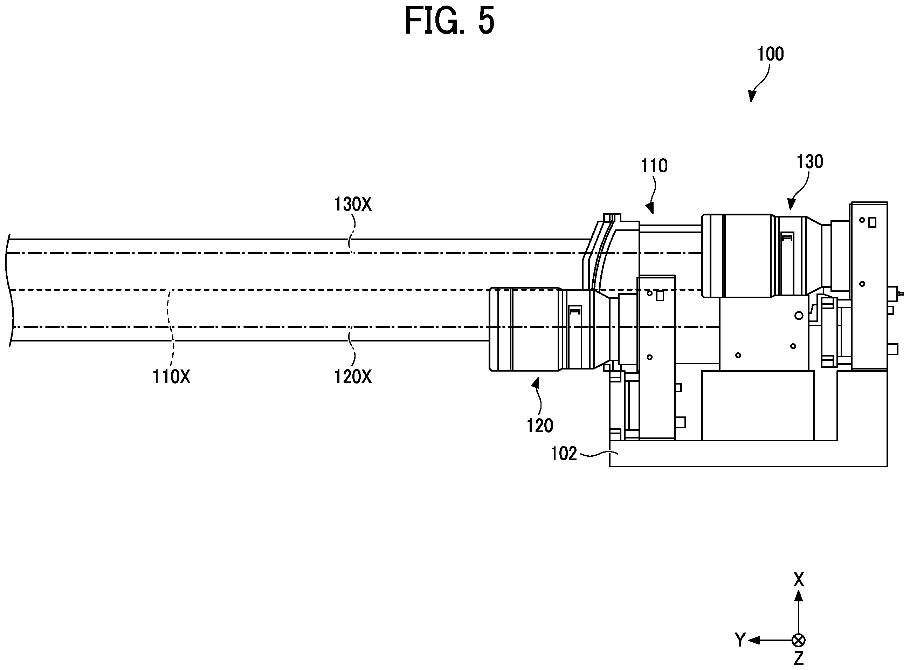

FIG. 5 is an illustration of arrangement of the optical axes of the image-capturing device 100 according to an embodiment. In the image-capturing device 100 in FIG. 5, an optical axis 110X (a first optical axis) of the lighting device 110 is between the optical axis 120X (a second optical axis) of the monochrome camera 120 and the optical axis 130X (a second optical axis) of the color camera 130 in a lateral view of the image-capturing device 100 in the up-to-down direction (i.e., the +Z-direction).

This configuration allows a minimum width of the irradiation range of light emitted from the lighting device 110 in the longer-side direction (i.e., the Z-direction) and a minimum divergence angle of the emitted light, and thus achieves a higher light collection efficiency of the light emitted from the lighting device 110. Further, the image-capturing device 100 with such configuration according to an embodiment allows a reduced intensity of light emitted from the lighting device 110, and thus achieves a compact and low-power lighting device 110.

### Example of Functional Configuration of Control Device

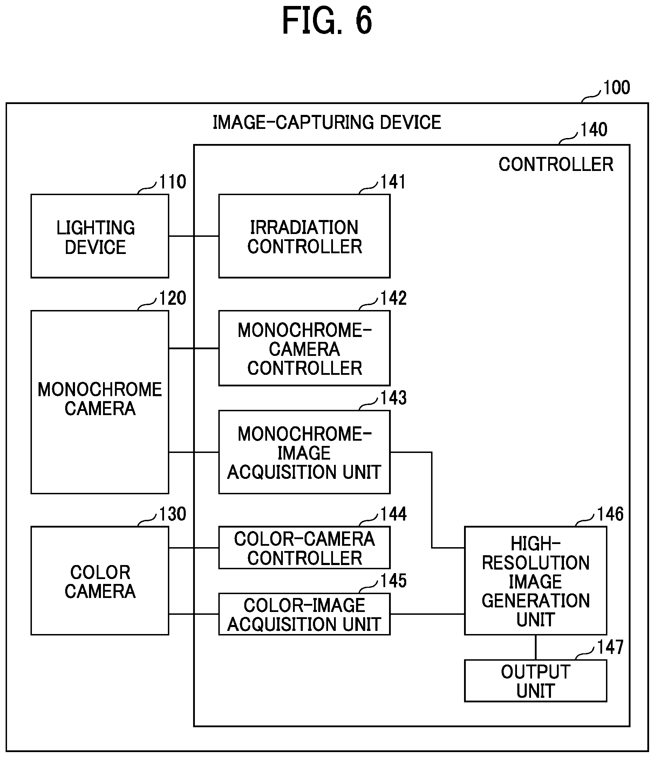

FIG. 6 is a block diagram of a functional configuration of a controller 140 included in the image-capturing device 100 according to an embodiment of the present disclosure.

As illustrated in FIG. 6, the image-capturing device 100 according to one embodiment includes a controller 140. The controller 140 includes an irradiation controller 141, a monochrome-camera controller 142, a monochrome-image acquisition unit 143, a color-camera controller 144, a color-image acquisition unit 145, and a high-resolution image generation unit 146.

The irradiation controller 141 controls light emission of the lighting device 110. The irradiation controller 141 sets the amount of light (e.g., light intensity) to be emitted from the lighting device 110 to an amount of light to capture a monochrome image by the monochrome camera 120 (i.e., the irradiation controller 141 controls the lighting device 110 to emit light having an amount to capture a monochrome image by the monochrome camera 120). In some examples, the irradiation controller 141 uses a predetermined set amount of light as the amount of light to capture a monochrome image by the monochrome camera 120 described above. The predetermined value is a value set by the user in advance. In some other examples, the irradiation controller 141 automatically detects the brightness of the object 20 and automatically adjusts the amount of light to capture a monochrome image by the monochrome camera 120 based on the detected brightness of the object 20 to enable a predetermined brightness of a monochrome image.

The monochrome-camera controller 142 controls capturing of a high-resolution monochrome image of an object by the monochrome camera 120.

The monochrome-image acquisition unit 143 acquires a high-resolution monochrome image of the object captured by the monochrome camera 120.

The color-camera controller 144 controls capturing of a low-resolution color image of the object by the color camera 130.

The color-image acquisition unit 145 acquires a low-resolution color image of the object captured by the color camera 130.

The high-resolution image generation unit 146 acquires color information from the color image acquired by the color-image acquisition unit 145 and superimposes the color information on the monochrome image acquired by the monochrome-image acquisition unit 143, thus generating a high-resolution color image. Specifically, for example, the high-resolution image generation unit 146 aligns the monochrome image acquired by the monochrome-image acquisition unit 143 with the color image acquired by the color-image acquisition unit 145. This alignment involves, for example, extracting a common feature point from the monochrome image and the color image. The high-resolution image generation unit 146 superimposes, on each pixel of the monochrome image, color information of a corresponding pixel (i.e., a pixel at a corresponding position) of the color image. Thus, the high-resolution image generation unit 146 generates a high-resolution color image.

The controller 140 further includes an output unit 147. The output unit 147 outputs the high-resolution color image generated by the high-resolution image generation unit 146 to a predetermined output destination (for example, a memory included in the controller 140, an external apparatus provided outside the image-capturing device 100 (for example, a server apparatus and a personal computer).

The functions of the controller 140 FIG. 6 can be achieved by one or multiple processing circuits. Processing circuitry includes a programmed processor, as a processor includes circuitry. A processing circuit also includes devices such as an application specific integrated circuit (ASIC), a digital signal processor (DSP), a field programmable gate array (FPGA), and conventional circuit components arranged to perform the recited functions.

In some examples, some or all of the functions of the controller 140 in FIG. 6 is implemented by an external apparatus outside the image-capturing device 100 (for example, a server device and a personal computer).

### Example of Procedure of Process by Control Device

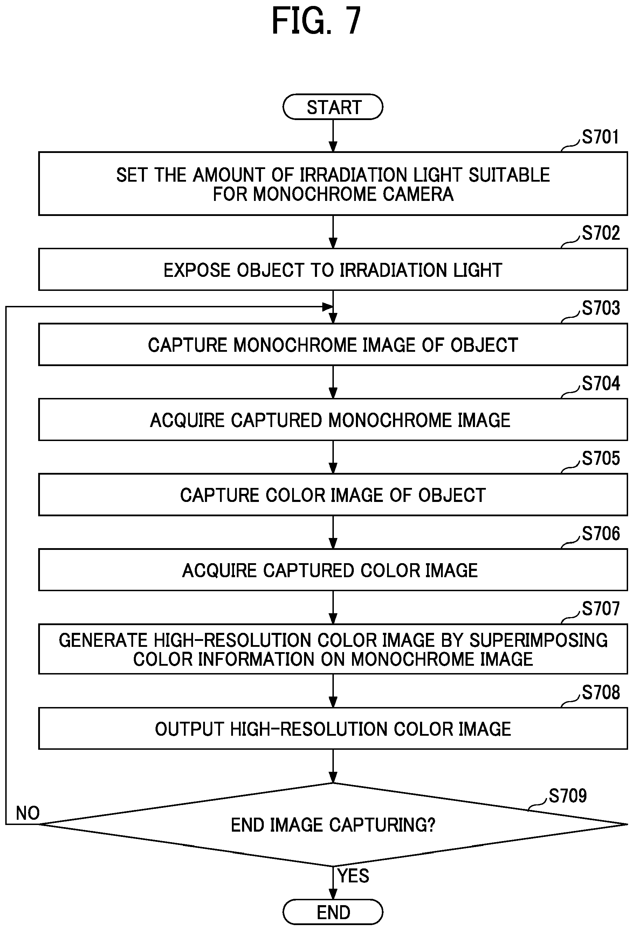

FIG. 7 is a flowchart of a process performed by the controller 140 included in the image-capturing device 100 according to an embodiment of the present disclosure.

The irradiation controller 141 controls the lighting device 110 to emit light having an amount (e.g., light intensity) to capture a monochrome image by the monochrome camera 120 (step S701).

The irradiation controller 141 controls the lighting device 110 to emit light with the amount of light set in step S701 (step S702).

The monochrome-camera controller 142 controls the monochrome camera 120 to capture a high-resolution monochrome image (a monochrome image having a first resolution) of an object (step S703).

The monochrome-image acquisition unit 143 acquires the high-resolution monochrome image of the object captured in step S703 (step S704).

The color-camera controller 144 controls the color camera 130 to capture a low-resolution color image (a color image having a second resolution lower than the first resolution) of the object (step S705).

The color-image acquisition unit 145 acquires the low-resolution color image of the object captured in step S705 (step S706).

The high-resolution image generation unit 146 acquires color information from the color image acquired in step S706 and superimposes the color information on the monochrome image acquired in step S704, to thus generate a high-resolution color image (step S707).

The output unit 147 outputs the high-resolution color image generated in step S707 to a predetermined output destination (step S708).

The controller 140 determines whether to end image capturing of the object 20 or not (step S709). For example, the controller 140 determines to end the image capturing of the object 20 when a particular end event occurs (for example, when the user performs an end operation).

When the controller 140 determines to not end image capturing of the object 20 (NO in step S709), the process returns to step S703.

When the controller 140 determines to end image capturing of the object 20 (YES in step S709), the series of processing in FIG. 7 ends.

As described above, the image-capturing device 100 according to one embodiment performs the series of processing in FIG. 7 to capture both a monochrome image and a color image of the object 20 at the same time, with light emitted from one lighting device 110. With this configuration, the image-capturing device 100 according to one embodiment continuously generates high-resolution color images of the object 20 using the continuously captured monochrome images and color images.

The image-capturing device 100 according to an embodiment with such a configuration eliminates the use of a light dedicated to each of the monochrome camera 120 and the color camera 130. Such an image-capturing device 100 according to an embodiment achieves a simple-configuration image-capturing device 100 provided with the monochrome camera 120 and the color camera 130.

In the image-capturing device 100 according to an embodiment, the amount of light emitted from the lighting device is set to the amount of light to capture a monochrome image by the monochrome camera 120. This configuration prevents a lack of brightness (or luminance) in a color image captured by the color camera 130. What is to be acquired from the color image captured by the color camera 130 to generate a high-resolution color image is at least color information, meaning that the image-capturing device 100 according to an embodiment does not have an adverse effect on the generation of a high-resolution color image because of the lack of brightness in a color image captured by the color camera 130.

### EXAMPLE

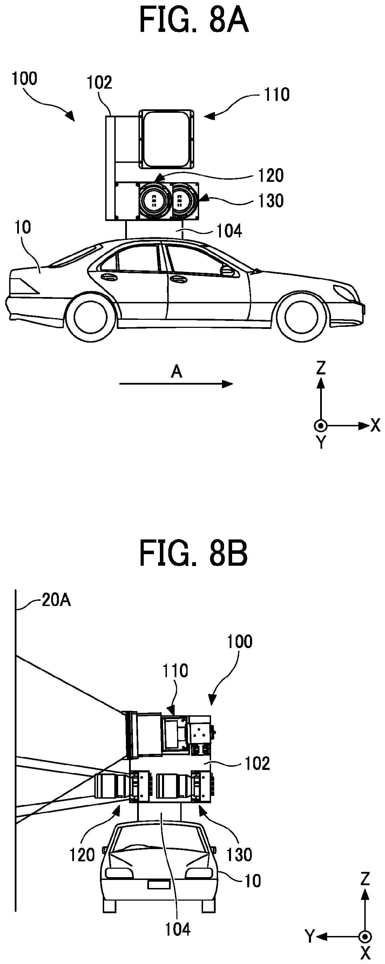

FIGS. 8A and 8B are illustrations of an image-capturing device 100 according to an embodiment of the present disclosure. In the present example, the image-capturing device 100 mounted on a vehicle 10 continuously captures images (a monochrome image and a color image) of an inner wall surface 20A of a tunnel.

FIGS. 8A and 8B are illustrations of an image-capturing device 100 according to an embodiment of the present disclosure. FIG. 8A is a side view of the vehicle 10 on which the image-capturing device 100 is mounted. FIG. 8B is a front view of the vehicle 10 on which the image-capturing device 100 is mounted.

In FIGS. 8A and 8B, the image-capturing device 100 is disposed to capture an image of an inner wall surface 20A (an example of the object 20) at the right of the vehicle 10 in a traveling direction A. In another example, the image-capturing device 100 is disposed to capture an image the road surface, the ceiling surface of a structure, or a wall surface at the left of the vehicle 10 in the traveling direction A (i.e., in the +X-direction). In FIGS. 8A and 8B, the image-capturing device 100 is enlarged to facilitate understanding the arrangement of the image-capturing device 100.

As illustrated in FIGS. 8A and 8B, the image-capturing device 100 is fixed to the roof of the vehicle 10 with a base plate 104 between the vehicle 10 and the image-capturing device 100. In FIGS. 8A and 8B, the irradiation direction in which the light emitted from the lighting device 110 proceeds, and the image-capturing directions of the monochrome camera 120 and the color camera 130 are directed to the right direction (i.e., the +Y-direction) relative to the traveling direction A of the vehicle 10.

This configuration allows the image-capturing device 100 to cause the monochrome camera 120 and the color camera 130 to continuously capture a high-resolution monochrome image and a low-resolution color image of the inner wall surface 20A at the right (i.e., the positive side of the tunnel along the Y-axis) of the vehicle 10 in the traveling direction A (i.e., in the +X-direction) by causing the lighting device 110 to emit light to the inner wall surface 20A while the vehicle 10 travels in the traveling direction A.

The monochrome image and the color image captured by the monochrome camera 120 and the color camera 130, respectively, include linear image-capturing ranges P1 and P2 with a longer-side direction up-to-down direction (i.e., along the Z-axis) within the irradiation range L1 irradiated with light emitted from the lighting device 110.

For each set of captured one monochrome image and one color image, the image-capturing device 100 acquires color information from the one color image and superimposes the acquired color information on the one monochrome image, so as to generate a high-resolution color image of the inner wall surface 20A. This allows the image-capturing device 100 to continuously generate a high-resolution color image of the inner wall surface 20A while the vehicle 10 on which the image-capturing device 100 is mounted travels forward. Such high-resolution color images of the inner wall surface 20A are used for inspection of the state of the inner wall surface 20A.

In the present example, the lighting device 110 emits white light or yellow light. For example, when the lighting device 110 emits yellow light, an object that is capable of reflecting blue light is less likely to be reflected in an image. However, since such an object capable of reflecting blue light is not present in the inner wall surface 20A of the tunnel, using yellow light has no adverse effect on the inspection of the inner wall surface 20A. However, when the lighting device 110 emits white light, such an object capable of reflecting blue light is more likely to be reflected in an image. Using white light has no impact on other objects that reflect light other than blue light, and thus has no adverse effect on the inspection of the inner wall surface 20A.

### Modification

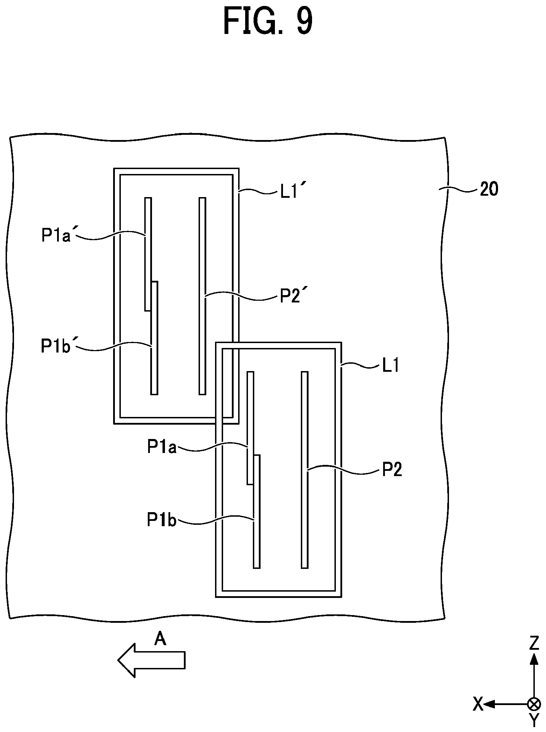

FIG. 9 is an illustration of irradiation ranges and image-capturing ranges of an image-capturing device 100 according to a modification of an embodiment of the present disclosure.

The image-capturing device 100 according to a modification of an embodiment includes multiple image-capturing units each including a lighting device 110, a monochrome camera 120, and a color camera 130. In FIG. 9, two image-capturing units are used. In another example, three or more image-capturing units are used.

In FIG. 9, an irradiation range L1, an image-capturing range P1a, an image-capturing range P1b, and an image-capturing range P2 are obtained by one of the two image-capturing units.

In FIG. 9, an irradiation range L1', an image-capturing range P1a', an image-capturing range P1b', and an image-capturing range P2' are obtained by the other one of the two image-capturing units.

As illustrated in FIG. 9, the image-capturing device 100 according to a modification of an embodiment causes one image-capturing unit and another image-capturing unit to emit light beams to the irradiation range L1 and the irradiation range L1' different from each other.

The image-capturing device 100 according to a modification of an embodiment includes multiple image-capturing units each including multiple monochrome cameras 120. Each monochrome camera 120 has an image-capturing range within the irradiation range irradiated with light emitted from the lighting device 110.

In FIG. 9, one image-capturing unit includes two monochrome cameras 120. Each of the two monochrome camera 120 has image-capturing ranges P1a and P1b within the irradiation range L1 irradiated with light emitted from the lighting device 110.

Further, another image-capturing unit includes two monochrome cameras 120. Each of the two monochrome camera 120 has image-capturing ranges P1a' and P1b' within the irradiation range L1' irradiated with light emitted from the lighting device 110.

As illustrated in FIG. 9, the image-capturing ranges P1a and P1b obtained by one image-capturing unit are connected in the line direction (i.e., along the Z-axis) of the line sensor 122 (a first line sensor) included in each monochrome camera 120, within the irradiation range L1.

Similarly, the image-capturing ranges P1a' and P1b' obtained by the other image-capturing unit are connected in the line direction (i.e., along the Z-axis) of the line sensor 122 included in each monochrome camera 120, within the irradiation range L1'. The monochrome camera 120 includes multiple monochrome cameras. The multiple monochrome cameras respectively have multiple image-capturing ranges P1a and P1b connected in the line direction within the irradiation range L1. The color camera 130 includes multiple color cameras. The number of multiple monochrome cameras is greater than the number of multiple color cameras.

The image-capturing device 100 according to a modification of an embodiment generates one monochrome image by connecting multiple monochrome images captured by multiple monochrome cameras 120 included in each image-capturing unit. Thus, this configuration allows generation of a high-resolution monochrome image with multiple low-resolution images captured by multiple monochrome cameras 120.

In FIG. 9, the irradiation range L1 of one image-capturing unit partly overlaps with the irradiation range L1' of another image-capturing unit.

However, the irradiation range L1 of one image-capturing unit does not overlap with any of the image-capturing ranges P1a', P1b', and P2' of the other imaging units, and thus does not have an adverse effect on any of the image-capturing ranges of the other image-capturing units.

Further, the irradiation range L1' of one image-capturing unit does not overlap with any of the image-capturing ranges P1a, P1b, and P2 of the other imaging units, and thus does not have an adverse effect on any of the image-capturing ranges of said one image-capturing units.

In another example, each image-capturing unit generates one monochrome image by connecting three or more monochrome images captured by three or more monochrome cameras 120. In still another example, each image-capturing unit generates one monochrome image by connecting multiple color images captured by multiple color cameras 130.

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present disclosure.

In above-described example, the inner wall surface 20A of the tunnel is an example of the object 20. This is merely one example. In addition to the inner wall surface of a certain tunnel, the object 20 includes, for example, an outer wall surface of a tunnel, a ceiling surface of a tunnel, or a wall surface of a structure other than tunnels.

In another example, the image-capturing device 100 does not include the high-resolution image generation unit 146.

The image-capturing device 100 that does not include the high-resolution image generation unit 146 works together with a high-resolution image generator (e.g., a personal computer, or an information processing apparatus such as a server) serving as the high-resolution image generation unit 146. Such an image-capturing device 100 and the high-resolution image generator configure an image-capturing system. In this case, the high-resolution image generator acquires color information from the color image received from the image-capturing device 100 and superimposes the color information on the monochrome image received from the image-capturing device 100 to generate a high-resolution color image.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An image-capturing device (100) comprising:
a light emitter (110) configured to emit light within an irradiation range (L1) to an object;
a monochrome camera (120) configured to capture a monochrome image of the object, the monochrome camera (120) having an image-capturing range (PI) within the irradiation range (L1);
a color camera (130) configured to capture a color image of the object, the color camera (130) having an image-capturing range (P2) within the irradiation range (L1); and
an irradiation controller (141) configured to cause the light emitter to emit the light having an amount to capture the monochrome image by the monochrome camera (120).

2. The image-capturing device (100) according to claim 1,
wherein a first amount of the light to capture the monochrome image by the monochrome camera (120) is smaller than a second amount of the light to capture the color image by the color camera (130), and
the irradiation controller (141) configured to cause the light emitter to emit the light having the first amount.

3. The image-capturing device (100) according to claim 1 or 2,
wherein the monochrome camera (120) captures a monochrome image having a first resolution, and
wherein the color camera (130) captures a color image having a second resolution lower than the first resolution.

4. The image-capturing device (100) according to claim 3, further comprising a high-resolution image generator (146) configured to:
acquire color information from the color image; and
superimpose the color information on the monochrome image to generate a high-resolution color image.

5. The image-capturing device (100) according to any one of claim 1 to 4,
wherein the monochrome camera (120) includes a first line sensor (122) extending in a line direction (Z), and
the color camera (130) includes a second line sensor (132) extending in the line direction (Z), and
the light emitter (110) is offset from each of the monochrome camera (120) and the color camera (130) in the line direction.

6. The image-capturing device (100) according to claim 5,
wherein the first line sensor (122) and the second line sensor (132) are at identical position in the line direction.

7. The image-capturing device (100) according to claim 5 or 6,
wherein a first optical axis (110X) of the light emitted from the light emitter (110) is between a second optical axis (120X) of the monochrome camera (120) and a third optical axis (130X) of the color camera (130) in a lateral view of the image-capturing device (100).

8. The image-capturing device (100) according to any one of claim 5 to 7,
wherein the monochrome camera (120) includes multiple monochrome cameras, and
the multiple monochrome cameras respectively have multiple image-capturing ranges (P1a, P1b) connected in the line direction within the irradiation range (L1).

9. The image-capturing device (100) according to any one of claim 5 to 8,
wherein the color camera (130) includes multiple color cameras, and
a number of the multiple monochrome cameras (120) is larger than a number of the multiple color cameras (130).

10. The image-capturing device (100) according to any one of claims 1 to 9,
wherein the light emitter (110) emits the light of white light or yellow light.

11. An image-capturing method comprising:
causing a light emitter to emit a light within an irradiation range (L1) to an object (S702), the light having an amount enough to capture a monochrome image by a monochrome camera (120);
capturing the monochrome image of the object by the monochrome camera having an image-capturing range within the irradiation range (S703); and
capturing a color image of the object by a color camera having an image-capturing range within the irradiation range (S704).

12. A carrier medium carrying computer readable code for controlling a processor to carry out the method according to claim 11.

13. An image-capturing system (100, 146) comprising:
the image-capturing device (100) according to any one of claims 1 to 10; and
a high-resolution image generator (146) configured to:
acquire color information from the color image; and
superimpose the color information on the monochrome image to generate a high-resolution color image.
